# FASCICULE DE BREVET EUROPEEN

(11) **EP 2 325 075 B1**
(45) Date de publication et mention de la délivrance du brevet: **06.06.2012**
(21) Numéro de dépôt: 10190695.6
(22) Date de dépôt: 10.11.2010
(51) Int. Cl.: B62K 21/14

(54) **Cintre de direction intégrant des moyens amortisseurs**
Lenkstange mit Dämpfungsvorrichtung
Handlebar with damping means

(30) Priorité: 12.11.2009 FR 0905423
(43) Date de publication de la demande: 25.05.2011
(73) Titulaire: Red Motion, 53001 Laval (FR)
(72) Inventeur: Seynaeve, Nicolas, 67400, ILLKIRCH-GRAFFENSTADEN (FR); Arnaud, Tanguy, 44350, GUERANDE (FR); Mermoud, François, 73170, YENNE (FR)
(74) Mandataire: Larcher, Dominique

(56) Documents cités:
- WO-A1-03/049992
- DE-U1- 9 114 411

## Description

Le domaine de l'invention est celui de la conception et de la fabrication de véhicules légers. Plus précisément, l'invention concerne un cintre de direction, notamment pour bicyclettes, conçu pour permettre l'amortissement de chocs et/ou de vibrations provoqués par le passage du véhicule sur un terrain présentant des obstacles franchissables et/ou des aspérités de surface.

L'invention s'applique à tout type de véhicules pourvus de cintre de direction, tels que les bicyclettes, les motocycles, les quads, voire les scooters de mer.

Dans le domaine de l'invention, en particulier en ce qui concerne les bicyclettes et les vélos tout terrain, une solution classique pour absorber les chocs et/ou les vibrations perçus par l'utilisateur du fait des irrégularités du terrain, consiste à monter à l'avant du vélo un dispositif de fourche télescopique. Ces fourches comprennent un élément élastique (par exemple un ressort métallique, un élastomère ou encore un ressort à air comprimé), soit un élément amortisseur tel qu'un vérin hydraulique.

Ces systèmes de suspension fonctionnent essentiellement selon une direction verticale, et doivent supporter une bonne partie du poids de l'utilisateur du vélo.

De ce fait, il est délicat de choisir la raideur optimale pour les éléments élastiques de ce type de suspension. En effet, en utilisant des ressorts et des amortisseurs trop souples, on voit très rapidement apparaître un phénomène de pompage (absorption partielle et non désirée de l'énergie de pédalage), lorsque le cycliste est en plein effort et développe des niveaux de puissance importants. Ce phénomène devient alors très vite pénalisant au niveau de l'efficacité d'interaction entre le cycliste, sa bicyclette et son environnement (le terrain), ce qui tend à pénaliser le cycliste, notamment en termes de fatigue.

Pour tenter de supprimer ce phénomène de pompage, une solution a consisté à augmenter la raideur des suspensions, mais ceci à un point où elles n'absorbent plus que partiellement les chocs provoqués par les irrégularités du terrain.

Cependant, de telles suspensions raffermies restent intéressantes pour amortir les chocs de grandes amplitudes et à basses fréquences, tels que ceux rencontrés lors de la pratique du vélo tout terrain. Il n'en demeure pas moins que les vibrations à forte fréquence provoquées par les irrégularités du bitume ou rencontrées lors de la progression sur chemin caillouteux, ne sont quasiment pas filtrées et donc transmises directement vers les membres supérieurs du cycliste via la potence et le cintre de la bicyclette.

Il en résulte que le cycliste subit des efforts induits par de telles vibrations, au risque de voir apparaître des troubles musculo-squelettiques, une diminution des réflexes vestibulo-oculaires ou encore une fatigue musculaire excessive.

Une solution pour limiter les effets de ce phénomène consiste à interposer entre la source de vibrations et le cycliste un ou plusieurs éléments élastiques susceptibles de se déformer en vue d'encaisser les efforts perturbateurs laissant le véhicule libre de suivre les inégalités du sol sans transmettre de vibrations au pilote.

Parallèlement, la réalisation traditionnelle des cintres de direction est basée sur l'utilisation de tubes, en matériaux composites ou métalliques, donc axisymétriques. Toutes ces réalisations basées sur des éléments axisymétriques ne peuvent être optimisées dans les deux plans de fonctionnement, c'est-à-dire dans le plan horizontal et dans le plan vertical.

Dans le domaine de l'invention, il a déjà été proposé des cintres de direction, notamment pour bicyclettes, conçus pour filtrer les vibrations provoquées par l'état du sol.

Un tel cintre est notamment décrit par le document de brevet publié sous le numéro FR-A-2690128. Selon la solution décrite par ce document, le cintre est formé d'une lame en matériau composite à fibres longitudinales non coupées, noyées dans un liant, le cintre présentant de chaque côté d'une partie centrale, une partie souple et amincie et une partie terminale. Chaque partie centrale de la lame comprend des régions souples, amincies verticalement tandis qu'elles présentent une largeur, dans le plan horizontal, sensiblement constantes, de façon à favoriser le fléchissement dans le sens vertical.

En dépit de la théorie de conception de ce cintre, on déplore dans la pratique que sa flexibilité est aussi importante vers le haut que vers le bas, altérant de ce fait la maniabilité du véhicule équipé d'un tel cintre, ainsi que la précision de pilotage. De plus, le rendement de l'utilisateur lors des phases de traction sur le cintre (relance « en danseuse » sur une bicyclette par exemple) est diminué. En outre, l'énergie des chocs n'est pas absorbée par un élément amortissant ; au contraire, on déplore un effet ressort.

On connaît également le cintre décrit par le document DE-U-9114411.

L'invention a notamment pour objectif de pallier ces inconvénients de l'art antérieur.

Plus précisément, l'invention a pour objectif de proposer un cintre de direction pour véhicule léger, en particulier pour bicyclette, qui soit conçu pour absorber des chocs et/ou des vibrations, et qui permette une meilleure transmission du couple de direction comparé aux solutions de l'art antérieur.

L'invention a également pour objectif de fournir un tel cintre dont la capacité d'amortissement des chocs et/ou des vibrations peut être adaptée aisément.

L'invention a aussi pour objectif de fournir un tel cintre qui n'engendre pas, ou quasiment, de surpoids.

Ces objectifs, ainsi que d'autres qui apparaîtront par la suite, sont atteints grâce à l'invention telle que définie dans la revendication 1.

Grâce à l'invention, on obtient un cintre de direction apte à amortir les chocs et/ou les vibrations de façon efficace, ceci tout en permettant de conserver une grande précision de pilotage s'agissant du couple de direction.

En effet, la mise en oeuvre d'un ou de plusieurs limiteurs de flexion permet de :
- contribuer à la raideur du cintre dans la direction antéro-postérieure du véhicule ;
- contribuer à la raideur du cintre dans le plan vertical, dans le sens ascendant et/ou dans le sens descendant ;
- obtenir une dissipation des chocs et/ou vibrations susceptibles d'être transmises à l'utilisateur, évitant le phénomène d'effet ressort mentionné en référence à l'art antérieur.

En particulier, avec de tels limiteurs de flexion, le cycliste peut, lors d'une relance « en danseuse » (debout sur les pédales), tirer sur le cintre de direction sans que cela n'occasionne une perte d'énergie. Dans le même temps, un cintre de bicyclette selon l'invention peut aussi amortir les chocs et/ou les vibrations, grâce aux différents limiteurs de flexion dont il peut être équipé et qui peuvent lui procurer une flexibilité différente suivant les directions.

De plus, comme cela va apparaître plus clairement par la suite, le ou les limiteurs de flexion sont montés sur le cintre de façon interchangeable, ce qui permet de modifier la flexibilité du cintre, en particulier dans la direction verticale. Une grande variété de limiteurs de flexion est donc réalisable, dans différents matériaux notamment, et l'utilisateur peut choisir d'installer les limiteurs de flexion les plus adaptés à ses besoins, liés en particulier à sa pratique et/ou à sa physiologie (et en particulier à son poids).

Un cintre de direction selon l'invention présente donc une flexibilité qui peut être différente selon les directions de la flexion, et facilement modifiée avec le principe d'intégration de limiteurs de flexion interchangeables. De ce fait, le cintre est mieux adapté aux besoins de l'utilisateur.

D'une manière générale, dans le cas du cyclisme, la rigidité du cintre selon l'invention dans le sens vertical (et en particulier vers le haut) permet d'optimiser l'efficience du couple cycliste/bicyclette, lorsque le cycliste exerce une traction sur le cintre afin d'ajuster la stratégie posturale de son buste.

Un cintre de direction selon l'invention, s'inscrit donc dans une approche de respect des contraintes bio-mécaniques de l'activité du cycliste, mais également d'autres sports appliquant l'utilisation d'un véhicule léger, tel que le quad ou le scooter des mers.

En outre, selon l'invention ledit ou lesdits limiteurs de flexion comprennent une portion de recouvrement de ladite portion flexible dudit organe élastiquement déformable, ladite portion de recouvrement étant montée de façon à travailler en flexion et/ou compression lors d'une flexion verticale du cintre.

On peut de cette façon augmenter la raideur du cintre dans la direction antéro-postérieure du véhicule, ainsi que dans la direction verticale et ceci de façon modulable en adaptant la nature du matériau utilisé pour réaliser la portion de recouvrement du ou des limiteurs de flexion.

On note que la limitation de la flexion dans la direction verticale se fait donc par phénomène de compression au niveau du ou des limiteurs de flexion. En pratique, selon le mode de réalisation préférentiel de l'invention décrit ci-dessous,la portion flexible est en matériaux composites (fibre de verre, carbone, kevlar - marque déposée -) avec un module compris entre 70 000 et 300 000 MPa selon le dimensionnement. Celui-ci va donc influer en tout premier lieu sur la flexibilité générale du cintre.

Parallèlement, et toujours selon le mode de réalisation préférentiel de l'invention décrit ci-dessous, les limiteurs de flexion sont réalisés en plastique ou en plastique/résine epoxy chargé fibre de verre dont le module peut atteindre 10 000 MPa pour assurer la modulation/limitation plus fine de la flexion et ce, de façon différenciée selon le sens de sollicitation vertical.

De plus, le positionnement extérieur des limiteurs, c'est-à-dire éloigné de l'axe de flexion (au niveau de la fibre neutre de la plaque), leur confère un moment d'inertie supérieur à celui de l'organe élastiquement déformable par rapport à la flexion du cintre. Plus précisément c'est l'ajout du ou des limiteurs qui de par leur positionnement extérieur va augmenter le moment d'inertie global du cintre. Ainsi les caractéristiques mécaniques du matériau employé pour réaliser le ou les limiteurs vont influer directement sur le module de flexion résultant de l'ensemble constitué par l'organe élastiquement déformable et le ou les limiteurs.

Selon une première variante de réalisation, ladite portion de recouvrement est réalisée dans un matériau rigide.

On note que, dans ce cas, la portion de recouvrement, du fait de sa rigidité, ne peut se déformer ou très peu, et, par conséquent, la flexion de l'organe élastiquement déformable est limitée au point d'entraîner une limitation générale de la flexion du cintre dans la direction verticale.

Un tel mode de réalisation apparaît donc plus particulièrement destiné à amortir des vibrations plutôt que des chocs.

Selon une deuxième variante de réalisation, ladite portion de recouvrement est réalisée dans un matériau déformable.

Dans ce cas, la compression de la portion de recouvrement déformable créée une force de résistance à la déformation qui se diffuse au niveau de la partie centrale et de l'interface de poignée (c'est-à-dire à chaque extrémité de la portion de recouvrement).

Cette force de résistance, plus ou moins importante selon les modules d'élasticité du matériau employé pour la portion de recouvrement est à l'origine de la modulation de la flexibilité de l'organe élastiquement déformable et donc de la flexibilité générale du cintre dans la direction verticale.

Selon une solution préférée, le cintre de direction comprend deux limiteurs de flexion, l'un rapporté sur le dessus dudit organe élastiquement déformable et l'autre sur le dessous dudit organe élastiquement déformable, les deux limiteurs de flexion ménageant entre eux un espace correspondant à l'épaisseur dudit organe élastiquement déformable.

Avantageusement, ladite portion de recouvrement du ou des limiteurs de flexion vient en appui d'une part contre ladite partie centrale et, d'autre part, contre ladite interface de poignées.

Ladite portion de recouvrement dudit ou desdits limiteurs de flexion présente à chacune de ses extrémités un prolongement dont l'un est logé dans ladite partie centrale, dans un évidement de celle-ci, et l'autre est logé dans ladite interface de poignée, dans un évidement de celle-ci.

On obtient ainsi une structure de cintre permettant un assemblage des différents organes fiable et pouvant être réalisé aisément, ceci pour opérer un démontage et un montage rapide lors d'un éventuel changement des portions de recouvrement en vue de modifier la flexibilité du cintre.

Ledit organe élastiquement déformable présente la forme d'une plaque de largeur supérieure à son épaisseur.

Un tel organe élastiquement déformable présente ainsi une forme basique, particulièrement simple à fabriquer et peu coûteuse à réaliser.

De plus, une plaque ainsi constituée confère au cintre une raideur importante dans la direction antéro-postérieure du véhicule.

En ce qui concerne le mode d'assemblage, ledit organe élastiquement déformable est fixé à ladite partie centrale et à ladite interface de poignée par vissage ou par collage.

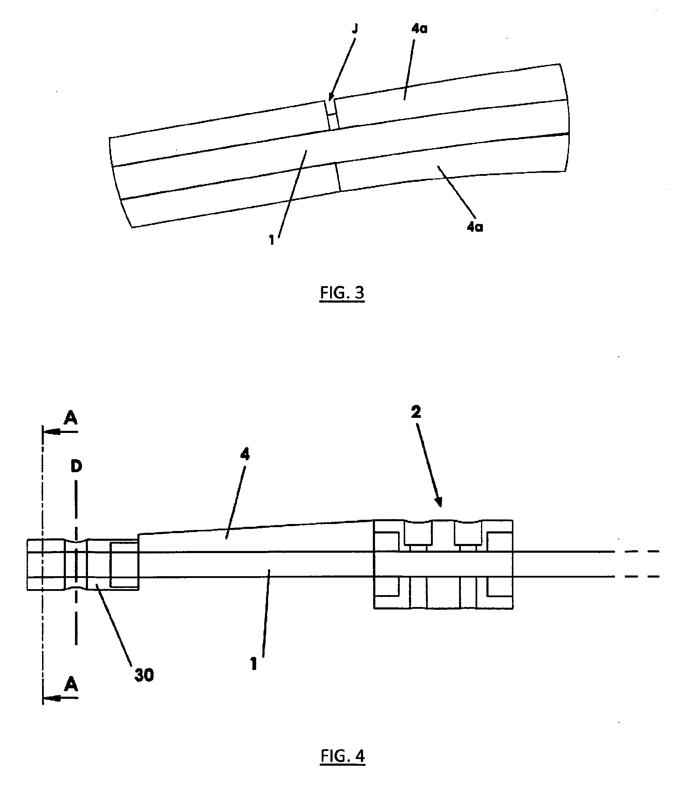

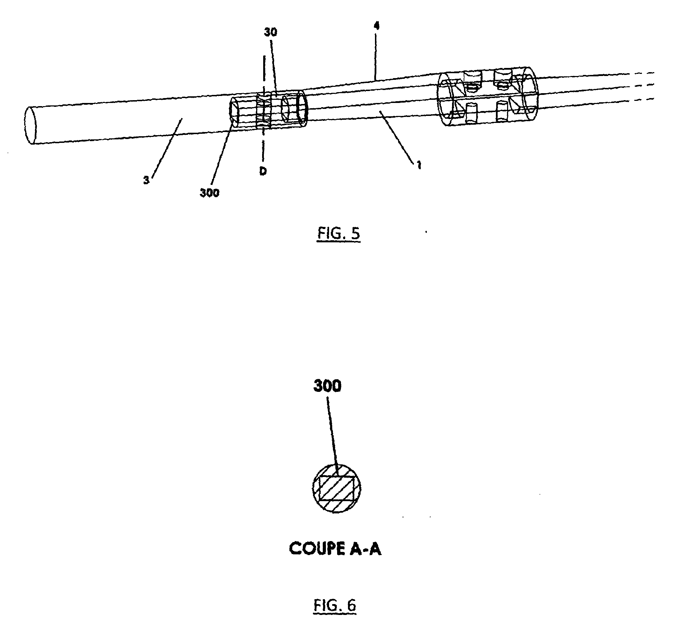

De plus, tel que cela apparait sur les figures 4 et 5 au niveau de l'axe D, une douille ou un cylindre traversant de part en part le cintre au niveau de la zone d'assemblage entre la plaque et la pièce d'interface poignée peut être utilisée pour bloquer ces éléments en translation.

Par ailleurs, selon une variante envisageable, ladite interface de poignée fait partie d'une pièce présentant un organe d'accouplement avec une poignée.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une vue en perspective d'un cintre selon un mode de réalisation de l'invention ;
- la figure 2 est une vue partielle en coupe d'un mode de réalisation de l'invention ;
- la figure 3 est une vue de détails d'un cintre selon l'invention, dans une configuration de flexion ;
- les figures 4 et 5 sont des vues d'un mode de réalisation particulier de l'invention, selon lequel le cintre comprend une pièce d'accouplement avec une poignée ;
- la figure 6 est une vue en coupe d'un organe d'accouplement susceptible d'équiper un cintre selon l'invention.

Comme indiqué précédemment, le principe de l'invention réside dans le fait de proposer un cintre de direction flexible apte à amortir des chocs et/ou des vibrations, mettant en oeuvre un ou plusieurs organes interchangeables recouvrant un organe élastiquement déformable de façon à prédéterminer la flexibilité du cintre tant verticalement que horizontalement.

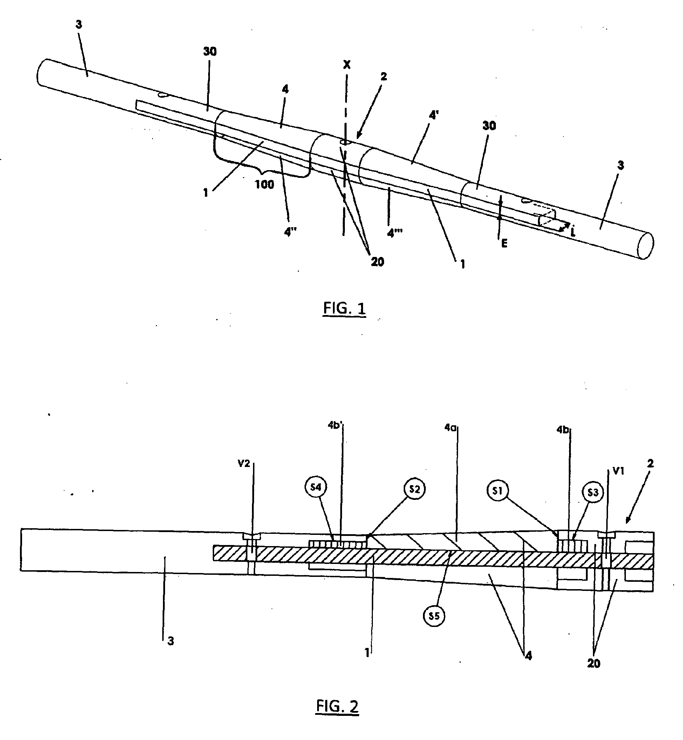

En référence à la figure 1, un cintre de direction selon l'invention comprend :
- une partie centrale 2, par laquelle passe l'axe de rotation directionnel X du cintre ;
- au moins un organe élastiquement déformable 1, favorisant la flexion du cintre de part et d'autre de la partie centrale 2.

Selon le présent mode de réalisation, le cintre comprend une plaque 1 élastiquement déformable, s'étendant entre les deux interfaces de poignée 30, en passant par la partie centrale 2. La plaque est fixée par chacune de ses extrémités sur une interface de poignée 30.

De cette façon, la plaque 1 présente dans l'intervalle séparant l'interface de poignée et la partie centrale, une portion flexible 100.

En d'autres termes, l'organe élastiquement déformable est constitué d'une plaque unique s'étendant d'une interface de poignée à l'autre, en étant fixée au niveau de sa portion centrale sur la partie centrale 2 (la plaque unique présentant alors un orifice permettant le passage d'un organe de fixation du cintre sur la potence de direction du véhicule).

On note par ailleurs qu'on entend par « interface de poignée » soit une partie intégrante d'une poignée formée de façon à recevoir un organe élastiquement déformable, soit une partie d'une pièce présentant un organe d'accouplement avec une poignée séparable tel que cela va être expliqué plus en détail par la suite.

On note que, selon une variante envisageable, le cintre peut comprendre deux plaques élastiquement déformables, chacune s'étendant entre la partie centrale et une interface de poignée 30.

De plus, selon le principe de l'invention, le cintre comprend en outre au moins un limiteur de flexion horizontal 4, 4', 4", 4 "', rapporté sur l'organe élastiquement déformable de façon à moduler (dans le sens d'une rigidification) la flexion dans la direction verticale de l'organe élastiquement déformable.

La ou les plaques constituant le ou les organes élastiquement déformables 1 sont réalisées en un matériau choisi pour tolérer les grandes déformations. Plus particulièrement, on choisit des matériaux composites à base de fibres de verre noyés dans une matrice en résine thermodurcissable ou thermodéformable. L'orientation parallèle des fibres suivant un axe médio-latéral (correspondant à un axe reliant les extrémités du cintre) est privilégiée.

En outre, la flexibilité de la ou des plaques peut être modulée par l'intégration variable de fibres de verre et/ou de carbone et/ou d'aramide et/ou d'autres fibres de renfort d'origine synthétique et/ou naturelle.

Les plaques constituant le ou les organes élastiquement déformables présentent une largeur L supérieure à leur épaisseur E.

Tel que cela apparaît sur les figures 1 et 2, les limiteurs de flexion sont au nombre de deux pour chaque portion flexible 100 de la plaque 1, l'un étant rapporté sur le dessus de la plaque et l'autre sur le dessous de la plaque correspondante, ces deux limiteurs ménageant entre eux un espace correspondant à l'épaisseur E de la plaque 1 correspondante.

En référence à la figure 2, chaque limiteur de flexion comprend une portion de recouvrement 4a de la portion flexible 100 de la plaque 1 correspondante.

Cette portion de recouvrement 4a est réalisée, soit dans un matériau rigide, soit dans un matériau déformable.

De cette façon, les limiteurs de flexion sont des éléments d'interaction avec la partie centrale 2 et l'interface de poignée correspondante.

Lors de la flexion de la plaque 1 dans un sens (vers le bas ou vers le haut), le limiteur de flexion se trouvant du côté de la flexion (le limiteur 4a du bas sur l'exemple de la figure 3) se retrouve en compression entre la partie centrale 2 et l'interface de poignée 30.

Dans le cas d'un limiteur de flexion ayant une portion de recouvrement réalisée en un matériau rigide, le limiteur de flexion ne peut pas se déformer (ou se déforme très peu) et la flexion de la plaque est donc limitée, ce qui entraîne la limitation générale de la flexion du cintre dans le plan frontal.

Dans le cas d'un limiteur de flexion ayant une portion de recouvrement déformable, la compression du limiteur de flexion créée une force de résistance à la déformation appliquée sur la partie centrale et sur l'interface de poignée correspondante, au niveau des surfaces de contact respectivement S1 et S2 (figure 2). Cette force de résistance, plus ou moins importante selon le module d'élasticité du matériau employé pour la réalisation de la portion de recouvrement est donc à l'origine de la modulation de la flexibilité de la plaque, et donc de la flexibilité générale du cintre dans le plan frontal.

On comprend donc que la portion de recouvrement 4a des limiteurs de flexion vient en appui d'une part contre une face S1 d'extrémité de la partie centrale et, d'autre part, contre une surface S2 d'extrémité de l'interface de poignée 30.

Par ailleurs, chaque limiteur de flexion horizontale présente, à chaque extrémité de la portion de recouvrement 4a, un prolongement 4b, 4b'.

L'un des prolongements 4b est inséré dans un évidement de la partie centrale 2 tandis que l'autre prolongement 4b' pénètre un évidement de l'interface de poignée 30.

Le prolongement 4b présente ainsi une surface de contact S3, cylindrique ou non, avec la partie centrale 2 et le prolongement 4b' présente une surface de contact S4, cylindrique ou non, avec l'interface de poignée 30 correspondante. De plus, les prolongements 4b, 4b' sont de préférence prévus pour présenter une surface de contact S5 avec la plaque 1. Les surfaces de contact S3, S4 et S5 sont traitées de telle sorte que les prolongements 4b et 4b' peuvent coulisser par rapport aux évidements dans lesquels ils sont destinés à être insérés.

Ainsi, tel que cela apparaît sur la figure 3, le limiteur de flexion du haut (par opposition à celui du bas, en compression sur la figure 3) s'écarte légèrement de l'interface de poignée, en coulissant le long de la plaque 1. Ceci est engendré par l'augmentation de la distance en haut de la flexion (étirement) et surtout par le fait que le prolongement 4b' n'est pas fixé et qu'il coulisse dans l'évidement présent dans l'interface de poignée. On voit alors apparaître un jeu J entre le limiteur de flexion et l'interface de poignée correspondante.

Comme l'illustre le limiteur de flexion du bas sur la figure 3, le jeu peut a contrario être nul et la compression maximale sur la surface de contact S2, entre la portion de recouvrement 4a et l'interface de poignée 30, dans le cas d'un limiteur de flexion 4 positionné en dessous de l'arc de la flexion.

De la même façon, un jeu peut apparaître entre un limiteur de flexion 4 et la partie centrale 2, d'un côté de la flexion, tandis que le limiteur de flexion est en compression contre la partie centrale, par son prolongement 4b et/ou sa portion de recouvrement 4a, de l'autre côté de la flexion.

En référence à la figure 2, chaque interface de poignée 30 présente un évidement sous la forme d'une fente dimensionnée de façon à recevoir de façon ajustée une plaque 1. La partie s'étendant au-dessus de cette fente et la partie s'étendant en dessous de cette fente présentent chacune un orifice en correspondance l'un de l'autre de façon à ménager un passage V2 pour l'introduction d'un organe de fixation par vissage solidarisant la plaque 1 à l'interface de poignée.

On note que :
- la partie centrale 2 est, selon le présent mode de réalisation, constituée par un assemblage de deux pièces 20 ménageant entre elles un espace correspondant à l'épaisseur E de la plaque 1 de telle sorte que cette plaque est maintenue pincée entre les deux pièces 20 de la partie centrale, celles-ci présentant chacune un ou plusieurs orifices en correspondance l'un de l'autre de façon à ménager un passage V1 pour un organe de fixation par vissage ;
- les limiteurs de flexion prennent, selon le présent mode de réalisation, la forme de demi-coquilles assurant une jonction de surface externe entre la partie centrale et l'interface de poignée, les limiteurs de flexion formant avec la plaque intercalée entre eux une partie essentiellement tronconique du cintre.

Ainsi, la fixation conjuguée de la plaque 1 à la partie centrale 2 et à une interface de poignée 30 permet, également, de retenir des limiteurs de flexion 4 préalablement placés contre la plaque, entre la partie centrale et l'interface de poignée. En effet, les limiteurs de flexion sont alors retenus axialement, entre la partie centrale 2 et une interface de poignée 30, au niveau des surfaces S1 et S2 avec lesquelles ils sont en contact lorsqu'aucune flexion n'est appliquée, et radialement, grâce aux surfaces de contact S3, S4 et S5 entre les prolongements 4b, 4b' et les évidements correspondants de la partie centrale et de l'interface de poignée 30.

On note par ailleurs que, selon un autre mode d'assemblage envisageable, la plaque 1 peut être solidarisée à la partie centrale par collage et à l'interface de poignée également par collage via une pièce d'ajustement. La solidarisation par collage ne constitue cependant pas un mode de réalisation préférentiel en vue de l'interchangeabilité des limiteurs de flexion.

Dans tous les cas, la fixation de la plaque aux interfaces de poignée, aux pièces d'ajustement et/ou à la partie centrale, doit donc être conçue de telle sorte qu'elle soit réversible et qu'elle permette à l'utilisateur de monter et démonter facilement les limiteurs de flexion.

Selon un mode de réalisation préférentiel, le montage du cintre repose sur la fixation réversible (par vissage, par exemple) de la plaque avec une partie centrale en deux morceaux, ainsi qu'avec l'axe de rotation directionnel du cintre, tandis que la plaque est collée aux interfaces de poignées.

Pour changer de limiteurs de flexion entre la partie centrale et une interface de poignée, au choix, l'utilisateur n'a alors qu'à :
- déverrouiller la fixation entre la plaque et la partie centrale,
- retirer la partie centrale,
- retirer le ou les limiteurs de flexion déjà présents (en les faisant coulisser le long de la plaque, pour désengager les prolongements des portions de recouvrement par rapport aux évidements),
- installer le ou les limiteurs de flexion de son choix (par un mouvement de coulissement dans le sens inverse),
- replacer la partie centrale,
- verrouiller à nouveau la fixation entre la plaque, la partie centrale et l'axe de rotation directionnel du cintre.

Comme indiqué précédemment, l'interface de poignée 30 peut être une partie intégrante d'une poignée 3. Selon une variante envisageable illustrée par les figures 4 et 5, l'interface de poignée est une pièce séparée de la poignée 3 elle-même, et constitue une pièce d'accouplement avec une poignée 3.

La solidarisation d'une telle pièce d'accouplement avec la plaque 1 peut être obtenue de façon similaire à celle décrite précédemment (par vissage voire par collage).

Une telle pièce d'accouplement présente alors un organe d'accouplement 300 (figure 6), par exemple un évidement de section rectangulaire , destiné à recevoir une partie d'extrémité de la poignée de forme complémentaire. Un tel mode de réalisation permet de changer les poignées du cintre aisément en fonction des utilisations du véhicule envisagées.

Bien entendu, un cintre de direction selon l'invention peut présenter des formes et/ou des angles différents de ceux décrits précédemment, notamment pour conférer au cintre une forme courbée vers l'avant, vers l'arrière, vers le haut ou vers le bas en vue de surélever, surbaisser, avancer ou reculer les poignées par rapport à la partie centrale. La longueur du cintre de direction sur l'axe medio-latéral peut également varier autant que de besoin.

Un cintre de direction selon l'invention peut être utilisé seul ou en association et complément avec tout autre dispositif d'amortissement du véhicule.

## Revendications

1. Cintre de direction, notamment pour une bicyclette, comprenant une partie centrale (2) par laquelle passe l'axe de rotation directionnel (X) du cintre et au moins un élément élastique (1) favorisant la flexion du cintre de part et d'autre de ladite partie centrale,
ledit cintre comprenant, de part et d'autre de ladite partie centrale :
- au moins un organe élastiquement déformable (1) dont au moins une portion est rapportée et fixée sur ladite partie centrale et dont au moins une de ses extrémités est rapportée et fixée sur une interface de poignée (30), ledit organe élastiquement déformable présentant une portion flexible (100) entre ladite partie centrale et ladite interface de poignée ;
- au moins un limiteur de flexion (4), (4'), (4"), (4"') interchangeable rapporté sur ledit organe élastiquement déformable et s'étendant le long de ladite portion flexible de façon à rigidifier le cintre au niveau de la portion flexible,
ledit ou lesdits limiteurs de flexion comprenant une portion (4a) de recouvrement de ladite portion flexible dudit organe élastiquement déformable, ladite portion de recouvrement étant montée de façon à travailler en flexion et/ou compression lors d'une flexion verticale du cintre, ledit cintre étant **caractérisé en ce que** ladite portion de recouvrement (4a) dudit ou desdits limiteurs de flexion (4), (4'), (4"), (4"') présente à chacune de ses extrémités un prolongement (4b), (4b') dont l'un est logé dans ladite partie centrale (2), dans un évidement de celle-ci, et l'autre est logé dans ladite interface de poignée (30), dans un évidement de celle-ci, ledit organe élastiquement déformable (1) présentant la forme d'une plaque de largeur (L) supérieure à son épaisseur (E).

2. Cintre de direction selon la revendication 1, **caractérisé en ce que** ladite portion de recouvrement (4a) est réalisée dans un matériau rigide.

3. Cintre de direction selon la revendication 1, **caractérisé en ce que** ladite portion de recouvrement (4a) est réalisée dans un matériau déformable.

4. Cintre de direction selon l'une quelconque des revendications 1 à 3, **caractérisé en ce qu'**il comprend deux limiteurs de flexion (4), (4'), (4"), (4"'), l'un rapporté sur le dessus dudit organe élastiquement déformable (1) et l'autre sur le dessous dudit organe élastiquement déformable, les deux limiteurs de flexion ménageant entre eux un espace correspondant à l'épaisseur dudit organe élastiquement déformable.

5. Cintre de direction selon l'une quelconque des revendications 1 à 4, **caractérisé en ce que** ladite portion de recouvrement (4a) du ou desdits limiteurs de flexion (4), (4'), (4"), (4"') vient en appui d'une part contre ladite partie centrale (2) et, d'autre part, contre ladite interface de poignée (30).

6. Cintre de direction selon l'une quelconque des revendications 1 à 5, **caractérisé en ce que** ledit organe élastiquement déformable (1) est fixé à ladite partie centrale (2) et à ladite interface de poignée (30) par vissage ou par collage.

7. Cintre de direction selon l'une quelconque des revendications 1 à 6, **caractérisé en ce que** ladite interface de poignée (30) fait partie d'une pièce présentant un organe d'accouplement (300) avec une poignée.

## Claims

1. Steering handlebar, especially for a bicycle, comprising a central part (2), through which the directional axis of rotation (X) of the handlebar passes, and at least one elastic element (1) which promotes flexion of the handlebar on either side of said central part,
said handlebar comprising, on either side of said central part:
- at least one elastically deformable member (1) of which at least one portion is added onto and fixed onto said central part and of which at least one of its ends is added onto and fixed onto a grip interface (30), said elastically deformable member having a flexible portion (100) between the said central part and said grip interface;
- at least one interchangeable flexion-limiter (4), (4'), (4"), (4"') which is added onto said elastically deformable member and extends along said flexible portion in such a way as to stiffen the handlebar at the flexible portion,
said flexion-limiter or flexion-limiters comprising a portion (4a) for overlapping the said flexible portion of said elastically deformable member, said overlapping portion being mounted in such a way as to operate in flexion and/or compression when a vertical flexion of the handlebar occurs,
said handlebar being **characterised in that** said portion (4a) for overlapping said flexion-limiter or flexion-limiters (4), (4'), (4"), (4"') has, at each of its ends, an extension (4b, (4b'), one of which is housed in said central part (2), within a recess in the latter, and the other is housed in said grip interface (30), within a recess in the latter, said elastically deformable member (1) having the shape of a plate with a width (L) which is greater than its thickness (E).

2. Steering handlebar according to claim 1, **characterised in that** said overlapping portion (4a) is made of a rigid material.

3. Steering handlebar according to claim 1, **characterised in that** said overlapping portion (4a) is made of a deformable material.

4. Steering handlebar according to any of claims 1 to 3, **characterised in that** it comprises two flexion-limiters (4), (4'), (4"), (4"'), one added onto the top of said elastically deformable member (1) and the other onto the bottom of said elastically deformable member, the two flexion-limiters providing, between them, a space which corresponds to the thickness of said elastically deformable member.

5. Steering handlebar according to any of claims 1 to 4, **characterised in that** said portion (4a) for overlapping said flexion-limiter or flexion-limiters (4), (4'), (4"), (4"') rests, on the one hand, against said central part (2) and, on the other hand, against said grip interface (30).

6. Steering handlebar according to any of claims 1 to 5, **characterised in that** said elastically deformable member (1) is fixed to said central part (2) and to said grip interface (30) by screwing or by bonding.

7. Steering handlebar according to any of claims 1 to 6, **characterised in that** said grip interface (30) forms part of a piece having a member (300) for coupling to a grip.

## Patentansprüche

1. Lenkstange, insbesondere für ein Fahrrad, die ein Mittelteil (2) umfasst, durch welches die Lenkungsdrehachse (X) der Lenkstange verläuft und mindestens ein elastisches Element (1) aufweist, das die Biegung der Lenkstange auf beiden Seiten des besagten Mittelteils zulässt,
wobei die besagte Lenkstange auf beiden Seiten des Mittelteils Folgendes umfasst:
- mindestens eine elastisch verformbare Einrichtung (1), von der mindestens ein Bereich an das besagte Mittelteil angelegt und daran befestigt ist und von der mindestens ein Ende an einen Übergang zu einem Griff (30) angelegt und daran befestigt ist, wobei die besagte elastisch verformbare Einrichtung einen biegsamen Bereich (100) zwischen dem besagten Mittelteil und dem besagten Übergang zu einem Griff aufweist;
- mindestens einen auswechselbaren Biegungs-Begrenzer(4), (4'), (4"), (4'"), der an die besagte elastisch verformbare Einrichtung angelegt ist und sich entlang des besagten biegsamen Bereichs erstreckt, um die Lenkstange auf der Höhe dieses biegsamen Bereichs zu versteifen,
wobei der oder die besagten Biegungs-Begrenzer einen Bedeckungsbereich (4a) aufweisen, der den besagten biegsamen Bereich der besagten elastisch verformbaren Einrichtung bedeckt, wobei der besagte Bedeckungsbereich so angebracht ist, dass er sich bei einer vertikalen Biegung der Lenkstange unter Biegung und/oder Kompression verformt, wobei die besagte Lenkstange **dadurch gekennzeichnet ist, dass** der besagte Bedeckungsbereich (4a) des oder der Biegungs-Begrenzer (4), (4'), (4"), (4"') an jedem ihrer Enden eine Verlängerung (4b), (4b') aufweisen, von der die Eine in einer Aussparung des besagten Mittelteils (2) und die Andere in einer Aussparung des besagten Übergangs zu einem Griff (30) eingebettet ist, wobei die elastisch verformbare Einrichtung (1) die Form einer Platte aufweist, deren Breite (L) größer ist als ihre Dicke (E).

2. Lenkstange nach Anspruch 1, **dadurch gekennzeichnet, dass** der besagte Bedeckungsbereich (4a) aus einem starren Material hergestellt ist.

3. Lenkstange nach Anspruch 1, **dadurch gekennzeichnet, dass** der besagte Bedeckungsbereich (4a) aus einem verformbaren Material hergestellt ist.

4. Lenkstange nach einem der Ansprüche 1 bis 3, **dadurch gekennzeichnet, dass** sie zwei Biegungs-Begrenzer (4), (4'), (4"), (4"') aufweist, von denen Einer an der Oberseite der besagten elastisch verformbaren Einrichtung (1) und der Andere an der Unterseite der besagten elastisch verformbaren Einrichtung angelegt ist, wobei beide Biegungs-Begrenzer zwischen sich einen Raum frei lassen, welcher der Dicke der besagten elastisch verformbaren Einrichtung entspricht.

5. Lenkstange nach einem der Ansprüche 1 bis 4, **dadurch gekennzeichnet, dass** der besagte Bedeckungsbereich (4a) des oder der besagten Biegungs-Begrenzer (4), (4'), (4"), (4"') sich einerseits gegen das besagte Mittelteil (2) und andererseits gegen den besagten Übergang zu einem Griff (30) abstützt.

6. Lenkstange nach einem der Ansprüche 1 bis 5, **dadurch gekennzeichnet, dass** die besagte elastisch verformbare Einrichtung (1) an dem besagten Mittelteil (2) und an dem besagten Übergang zu einem Griff (30) festgeschraubt oder festgeklebt ist.

7. Lenkstange nach einem der Ansprüche 1 bis 6, **dadurch gekennzeichnet, dass** der besagte Übergang zu einem Griff (30) einem Teil angehört, welches eine Anschlusseinrichtung (300) mit einem Griff aufweist.
